(19) Europäisches Patentamt

European Patent Office

Office européen des brevets

(11) **EP 0 942 855 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(51) Int Cl.⁷: **B60R 21/32**

(21) Anmeldenummer: **98955328.4**

(86) Internationale Anmeldenummer:
**PCT/DE98/02728**

(22) Anmeldetag: **15.09.1998**

(87) Internationale Veröffentlichungsnummer:
**WO 99/017964 (15.04.1999 Gazette 1999/15)**

(54) **VERFAHREN UND ANORDNUNG ZUM ERMITTELN DER INERTIALLAGE EINES FAHRZEUGS**

METHOD AND DEVICE FOR DETERMINING THE INERTIAL POSITION OF A VEHICLE

PROCEDE ET DISPOSITIF POUR DETERMINER LA POSITION INERTIELLE D'UN VEHICULE

(84) Benannte Vertragsstaaten:
**DE FR GB SE**

(30) Priorität: **06.10.1997 DE 19744084**

(43) Veröffentlichungstag der Anmeldung:
**22.09.1999 Patentblatt 1999/38**

(73) Patentinhaber: **ROBERT BOSCH GMBH**
**70442 Stuttgart (DE)**

(72) Erfinder: **BREUNIG, Volker**
**D-74078 Heilbronn (DE)**

(56) Entgegenhaltungen:
**EP-A- 0 430 813      EP-A- 0 709 257**
**DE-A- 19 609 176     DE-C- 19 632 363**
**US-A- 5 797 111**

**Beschreibung**

Die Erfindung betrifft ein Verfahren und eine Anordung gemäß dem Oberbegriff des Anspruchs 1 bzw. 3.

Stand der Technik

Derartige verfahren bzw. Anordnungen sind im Stand der Technik allgemein bekannt.

In der deutschen Patentanmeldung 196 09 717.1 ist eine Anordnung zum Erkennen von Überrollvorgängen bei Fahrzeugen beschrieben. Falls es zu einem Überschlag eines Fahrzeugs kommt, müssen im Fahrzeug installierte Schutzeinrichtungen rechtzeitig ausgelöst werden; dazu gehören z.B. Überrollbügel, Gurtstraffer und verschiedene Airbags. Damit all diese Schutzeinrichtungen rechtzeitig ausgelöst werden können, muß möglichst früh erkannt werden, ob Drehungen des Fahrzeugs um seine Hochachse, seine Längsachse und seine Querachse zu einem Überschlag führen. Fehlentscheidungen eines Überrollvorganges müssen soweit wie möglich ausgeschlossen werden, so daß die Rückhalteeinrichtungen dann nicht ausgelöst werden, wenn z.B. das Fahrzeug an einem steilen Hang steht oder langsame Drehvorgänge bei Kurvenfahrten erfährt. Damit es nicht zu Fehlentscheidungen bei der Überrollsensierung kommt, muß die Inertiallage, das heißt die Ausgangslage des Fahrzeugs relativ zum erdfesten Koordinatensystem, bekannt sein. Die Überrollsensierung muß erkennen, ob Drehbewegungen des Fahrzeugs aus dieser Inertiallage heraus so groß sind, daß es zu einem Überschlag des Fahrzeugs kommt. Zur Vermeidung von Fehlentscheidungen bei der Überrollsensierung ist es daher wichtig, die Inertiallage des Fahrzeugs möglichst exakt zu bestimmen. Langsame dynamische Fahrzeugbewegungen, wie z.B. Auffahren auf eine Böschung, Fahren in einer Steilkurve, Brems- oder Beschleunigungsvorgänge sollten deshalb die Ermittlung der Inertial-Lagewinkel des Fahrzeugs nicht beeinflussen. Deshalb liegt der Erfindung die Aufgabe zugrunde, ein Verfahren und eine Anordnung der eingangs genannten Art anzugeben, wobei Störeinflüsse bei der Ermittlung der Fahrzeuginertiallage möglichst weitgehend ausgeschlossen werden.

Vorteile der Erfindung

Die genannte Aufgabe wird mit den Merkmalen des Anspruchs 1 bzw. des Anspruchs 3 dadurch gelöst, daß die Beschleunigungen des Fahrzeugs in Richtung seiner Hochachse und in Richtung seiner Quer- und/oder seiner Längsachse gemessen werden und daß der Lagewinkel des Fahrzeugs bezüglich seiner Längsachse und/oder der Lagewinkel bezüglich seiner Querachse sowohl aus der Beschleunigung in Richtung der Querachse bzw. Längsachse als auch aus der Beschleunigung in Richtung der Hochachse ermittelt wird. Von den beiden auf verschiedene Arten ermittelten Lagewinkel wird der kleinere als Inertial-Lagewinkel angenommen. Eine dynamische Lageveränderung des Fahrzeugs wird sich in der Regel nur auf den nach einem der beiden Algorithmen ermittelten Lagewinkel auswirken, so daß der andere Lagewinkel mit großer Wahrscheinlichkeit die Inertiallage des Fahrzeugs unverfälscht wiedergibt. Die beiden Algorithmen für die Ermittlung des Lagewinkels bieten ebenso eine Redundanz, falls ein Beschleunigungssensor fehlerhaft arbeitet.

Bei Überrollvorgängen handelt es sich in der Regel um sehr schnelle Lageänderungen des Fahrzeugs, die am besten durch Drehratenmessungen erfaßt werden können. Aus den gemessenen Drehraten werden dann die Lagewinkel durch Integration abgeleitet, und anhand dieser Lagewinkel wird entschieden, ob es zu einem Überschlag des Fahrzeugs kommt. Damit bei der Integration der gemessenen Drehraten nicht auch für einen Überrollvorgang unkritische langsame dynamische Fahrzeugbewegungen mit einfließen und die daraus folgenden Lagewinkel nicht zu einer Fehlentscheidung eines Überrollvorgangs führen, ist es gemäß einem Unteranspruch zweckmäßig, die Integration der Drehraten mit dem (den) ermittelten Intertial-Lagewinkel(n) zu starten.

Anhand eines in der Zeichnung dargestellten Ausführungsbeispiels wird nachfolgend die Erfindung näher erläutert. Es zeigen:

Figur 1 Beschleunigungskomponenten eines Fahrzeugs bezüglich seiner Quer- und seiner Hochachse,

Figur 2 Beschleunigungskomponenten eines Fahrzeugs bezüglich seiner Längs- und Hochachse und

Figur 3 ein Funktionsdiagramm zur Ermittlung der Inertial-Lagewinkel eines Fahrzeugs.

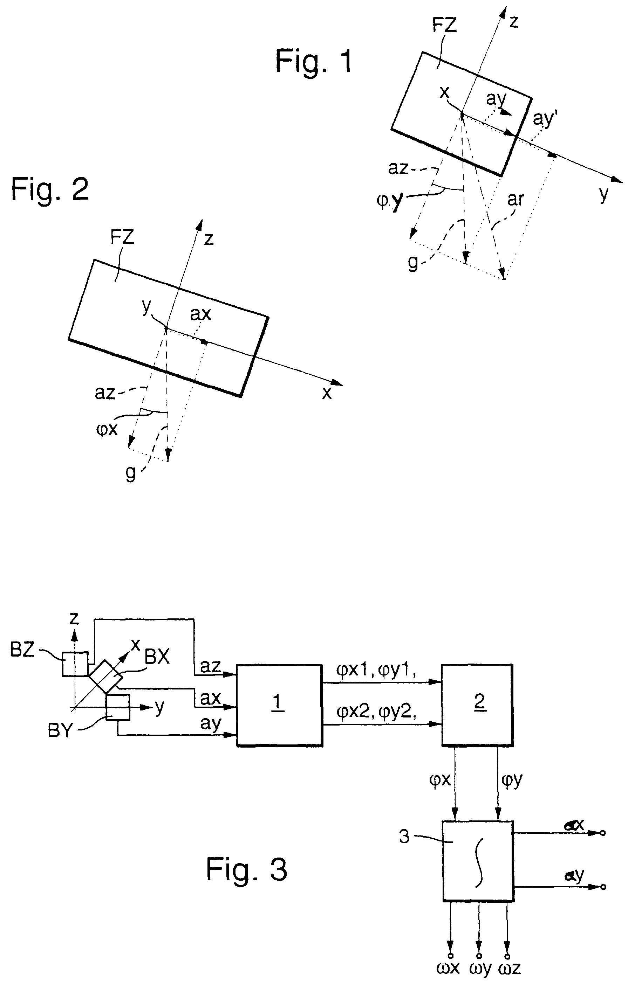

In der Figur 1 ist symbolisch ein Fahrzeug FZ von seiner Vorderseite her und in der Figur 2 dasselbe Fahrzeug FZ von seiner Längsseite her dargestellt. Das in den Figuren 1 und 2 eingezeichnete Koordinatensystem kennzeichnet die Hochachse z, die Längsachse x und die Querachse y des Fahrzeugs. Steht das Fahrzeug still oder bewegt es sich nur sehr langsam, so wirkt nur die Erdbeschleunigung g auf das Fahrzeug FZ. Werden im Fahrzeug die Beschleunigungen in Richtung seiner Hochachse z, seiner Längsachse x und seiner Querachse y gemessen, so sind diese einzelnen gemessenen Beschleunigungen Komponenten des Erdbeschleunigungsvektors g. Ist, wie in Figur 1 dargestellt, das Fahrzeug FZ bezüglich seiner Längsachse x gekippt, so resultiert aus dem Erdbeschleunigungsvektor g eine Beschleunigungskomponente az in Richtung der Hochachse z und eine Beschleunigungskomponente ay in Richtung der Querachse y. Bei einer in Figur 2 dargestellten Neigung des Fahrzeugs FZ um seine Querachse y resultieren aus dem Erdbeschleunigungsvektor g eine Beschleunigungskomponete az in Richtung der Hochachse z und eine Beschleunigungskomponente ax in Richtung der Längsachse x des Fahrzeugs.

Die Intertiallage des Fahrzeugs FZ orientiert sich an dem Beschleunigungsvektor g, dessen Betrag und Richtung feststehen. Der Neigungswinkel $\varphi y$ des Fahrzeugs um seine Längsachse x bezogen auf den Erdbeschleunigungsvektor g und der Neigungswinkel $\varphi x$ des Fahrzeugs um seine Querachse y bezogen auf den Erdbeschleunigungsvektor g werden als Intertial-Lagewinkel bezeichnet. Wirkt ausschließlich der Erdbeschleunigungsvektor g auf das Fahrzeug FZ, so lassen sich die Inertiallagewinkel $\varphi x$ und $\varphi y$, wie weiter unten noch gezeigt wird, fehlerfrei aus den gemessenen Beschleunigungskomponenten az, ax, ay bestimmen. Auf das Fahrzeug FZ wirkt aber nur dann allein die Erdbeschleunigung g, wenn entweder das Fahrzeug steht oder sich gleichförmig bewegt.

Bei einer dynamischen Fahrzeugbewegung, z.B. bei einer Kurvenfahrt oder einem Brems- oder Beschleunigungsvorgang, erfährt das Fahrzeug FZ weitere Beschleunigungskomponenten in Richtung seiner drei Achsen. In der Figur 1 ist angedeutet, daß das Fahrzeug in Richtung seiner Querachse y eine zusätzliche Beschleunigungskomponente ay' erfährt, wenn das Fahrzeug auf der schrägen Ebene in einer Kurve fährt und dadurch eine Zentrifugalbeschleunigung erfährt. Der aus den gemessenen Beschleunigungskomponenten az und ay + ay' resultierende Vektor ar weicht nun vom Erdbeschleunigungsvektor g ab. Ein aus dem Beschleunigungskomponenten az und ay + ay' berechneter Intertial-Lagewinkel würde als nicht mehr die korrekte Inertiallage bezogen auf den Erdbeschleunigungsvektor g wiedergeben. Wie auch in einem solchen Fall trotzdem noch Intertial-Lagewinkel ermittelt werden können, welche die tatsächliche Intertiallage des Fahrzeugs annähernd fehlerfrei beschreiben, wird nachfolgend anhand der Figur 3 erläutert.

Beschleunigungssensoren BX, BY und BZ im Fahrzeug messen die Beschleunigungen ax, ay und az in Richtung der Längsachse x, der Querachse y und der Hochachse z des Fahrzeugs. Im Funktionsblock 1 werden aus den einzelnen Beschleunigungskomponenten ax, ay und az die Lagewinkel $\varphi x1$ und $\varphi x2$ und/oder die Lagewinkel $\varphi y1$ und $\varphi y2$ gemäß den nachfolgenden Gleichungen (1) und (2) berechnet.

$$\varphi x1 \;=\; \arcsin \left( \frac{ay}{g} \right), \quad \varphi y1 \;=\; \arcsin \left( \frac{ax}{g} \right) \qquad\qquad (1)$$

$$\varphi x2 \;=\; \arccos \left( \frac{az}{g} \right), \quad \varphi y2 \;=\; \arccos \left( \frac{az}{g} \right) \qquad\qquad (2)$$

Kommt es nun aufgrund einer dynamischen Fahrzeugbewegung zu einer in Richtung der Längsachse x oder der Querachse y neben der aus der Erdbeschleunigung g resultierenden Beschleunigung zusätzlichen Beschleunigungskomponente, so ist der ermittelte Lagewinkel $\varphi x1$ bzw. $\varphi y1$ größer als der eigentliche Lagewinkel, nämlich der Inertial-Lagewinkel des Fahrzeugs.

Der auf die Erdbeschleunigung g zurückzuführenden Beschleunigung az in Richtung der Hochachse z des Fahrzeugs kann auch eine zusätzliche Beschleunigungskomponente überlagert sein, die sich z.B. ergibt, wenn das Fahrzeug durch ein Schlagloch fährt. In diesem Fall würde der gemäß Gleichung (2) berechnete Lagewinkel $\varphi x2$ bzw. $\varphi y2$ größer sein als der tatsächlich vorliegende Intertial-Lagewinkel. Um trotz dieser Problematik einen Lagewinkel $\varphi x$ bzw. $\varphi y$ ermitteln zu können, der die tatsächliche Inertiallage des Fahrzeugs mit einem möglichst geringen Fehler wiedergibt, wird im Funktionsblock 2 der kleinere der beiden berechneten Lagewinkel $\varphi x1$ und $\varphi y2$ bzw. der Lagewinkel $\varphi y1$ und $\varphi y2$ ausgewählt und dieser kleinere Lagewinkel als Intertial-Lagewinkel $\varphi x$ bzw. $\varphi y$ übernommen. Der kleinere von den beiden berechneten Lagewinkeln $\varphi x1$, $\varphi x2$ bzw. $\varphi y1$, $\varphi y2$ entspricht mit einer höheren Wahrscheinlichkeit dem tatsächlichen Inertialwinkel $\varphi x$ bzw. $\varphi y$ als der größere berechnete Lagewinkel, weil dieser wohl aus einer additiven Beschleunigungskomponente hervorgeht, die auf eine dynamische Fahrzeugbewegung zurückzuführen ist.

Der zuvor bestimmte Inertial-Lagewinkel $\varphi x$ bzw. $\varphi y$ kann vorzugsweise im Funktionsblock 3 bei einer Überrollsensierung verwendet werden. Bei Überrollvorgängen handelt es sich in der Regel um sehr schnelle Lageänderungen des Fahrzeugs, die am besten durch die Messung der Drehraten $\omega x$ um die Längsachse x, $\omega y$ um die Querachse y und $\omega z$ um die Hochachse z des Fahrzeugs erfaßt werden können. Aus den gemessenen Drehraten $\omega x$, $\omega y$ und $\omega z$

werden dann die Lagewinkel αx, αy durch Integration abgeleitet und anhand dieser Lagewinkel entschieden, ob es zu einem Überschlag des Fahrzeugs kommt und deshalb Rückhalteeinrichtungen (z.B.

Airbags, Sicherheitsgurte) ausgelöst werden müßten. Damit bei der Integration der gemessenen Drehraten ωx, ωy, ωz nicht auch für einen Überrollvorgang unkritische dynamische Fahrzeugbewegungen miteinfließen und die daraus folgenden Lagewinkel αx, αy nicht zu einer Fehlentscheidung bezüglich eines Überrollvorgangs führen, ist es zweckmäßig, die Integration der Drehraten mit den ermittelten Intertial-Lagewinkeln φx, φy zu starten.

**Patentansprüche**

1.  Verfahren zum Ermitteln der Intertiallage eines Fahrzeugs, **dadurch gekennzeichnet,**

    -   **daß** die Beschleunigungen (az, ay, ax) des Fahrzeugs (FZ) in Richtung seiner Hochachse (z) und in Richtung seiner Quer- (y) und/oder Längsachse (x) gemessen werden,
    -   **daß** der Lagewinkel (φx) des Fahrzeugs (FZ) um seine Längsachse (x) bezüglich des Erdbeschleunigungsvektors (g) und/oder der Lagewinkel (φy) des Fahrzeugs um seine Querachse (y) bezüglich des Erdbeschleunigungsvektors (g) sowohl aus der Beschleunigung (ay, ax) in Richtung der Querachse (y) bzw. Längsachse (x) als auch aus der Beschleunigung (az) in Richtung der Hochachse (z) nach folgenden Beziehungen ermittelt wird:

$$\varphi x1 \; = \; \arcsin\left(\frac{ay}{g}\right) \; bzw. \; \varphi y1 \; = \; \arcsin\left(\frac{ax}{g}\right) \qquad (1)$$

$$\varphi x2 \; = \; \arccos\left(\frac{az}{g}\right), \quad \varphi y2 \; = \; \arccos\left(\frac{az}{g}\right) \qquad (2)$$

    -   und **daß** als Inertial-Lagewinkel (φx, φy) der kleinere der beiden Winkel φx1 und φx2 bzw. φy1 und φy2 angenommen wird.

2.  Verfahren nach Anspruch 1, **dadurch gekennzeichnet, daß** bei der Herleitung eines Drehwinkels (αx) um die Fahrzeug-Längsachse (x) und/oder eines Drehwinkels (αy) um die Fahrzeug-Querachse (y) durch Integration (3) einer oder mehrerer gemessener Drehraten (ωx, ωy, ωz) die Integration mit dem (den) ermittelten Lagewinkel(n) (φx, φy) gestartet wird.

3.  Anordnung zum Ermitteln der Intertiallage eines Fahrzeugs, **dadurch gekennzeichnet,**

    -   **daß** Beschleunigungssensoren (BZ, BY, Bx) die Beschleunigungen (az, ay, ax) des Fahrzeugs (FZ) in Richtung seiner Hochachse (z) und in Richtung seiner Quer- (y) und/oder Längsachse (x) messen,
    -   **daß** Mittel (1, 2) vorhanden sind, welche den Lagewinkel (φx) des Fahrzeugs (FZ) um seine Längsachse (x) bezüglich des Erdbeschleunigungsvektors (g) und/oder den Lagewinkel (φy) um seine Querachse (y) bezüglich des Erdbeschleunigungsvektors (g) sowohl aus den Beschleunigungen (ay, ax) in Richtung der Querachse (y) bzw. Längsachse (x) als auch aus der Beschleunigung (az) in Richtung der Hochachse (z) nach folgenden Beziehungen herleiten:

$$\varphi x1 \; = \; \arcsin\left(\frac{ay}{g}\right) \; bzw. \; \varphi y1 \; = \; \arcsin\left(\frac{ax}{g}\right) \qquad (1)$$

$$\varphi x2 = \arccos\left(\frac{az}{g}\right), \quad \varphi y2 = \arccos\left(\frac{az}{g}\right) \tag{2}$$

- und **daß** die Mittel (1, 2) den kleineren der beiden Winkel φx1 und φx2 bzw. φy1 und φy2 als Inertial-Lagewinkel (φx, φy) bestimmen.

**Claims**

1.  Method for determining the inertial attitude of a vehicle, **characterized**

    - **in that** the accelerations (az, ay, ax) of the vehicle (FZ) are measured in the direction of its vertical axis (z) and in the direction of its lateral axis (y) and/or longitudinal axis (x)
    - **in that** the attitude angle ($\phi$x) of the vehicle (FZ) about its longitudinal axis (x) with reference to the earth's gravity vector (g) and/or the attitude angle ($\phi$y) of the vehicle about its lateral axis (y) with respect to the earth's gravity vector (g) are/is determined both from the acceleration (ay, ax) in the direction of the lateral axis (y) or longitudinal axis (x) and from the acceleration (az) in the direction of the vertical axis (z), using the following relationships:

$$\phi x1 = \arcsin\left(\frac{ay}{g}\right) \text{ or } \phi y1 = \arcsin\left(\frac{ax}{g}\right) \tag{1}$$

$$\phi x2 = \arccos\left(\frac{az}{g}\right), \phi y2 = \arccos\left(\frac{az}{g}\right) \tag{2}$$

    - and **in that** the smaller of the two angles φx1 and $\phi$x2, as well as $\phi$y1 and $\phi$y2, is assumed to be the inertial attitude angle ($\phi$x, $\phi$y).

2.  Method according to Claim 1, **characterized in that**, in order to derive a rotation angle ($\alpha$x) about the vehicle longitudinal axis (x) and/or a rotation angle ($\alpha$y) about the vehicle lateral axis (y) by integration (3) of one or more measured rotation rates ($\omega$x, $\omega$y, $\omega$z), the integration is started with the determined rotation angle or angles ($\phi$x, $\phi$y).

3.  Arrangement for determining the inertial attitude of a vehicle, **characterized**

    - **in that** acceleration sensors (BZ, BY, Bx) measure the accelerations (az, ay, ax) of the vehicle (FZ) in the direction of its vertical axis (z) and in the direction of its lateral axis (y) and/or longitudinal axis (x),
    - **in that** means (1, 2) are provided, which derive the attitude angle ($\phi$x) of the vehicle (FZ) about its longitudinal axis (x) with respect to the earth's gravity vector (g) and/or the attitude angle ($\phi$y) about its lateral axis (y) with respect to the earth's gravity vector (g) are/is determined both from the acceleration (ay, ax) in the direction of the lateral axis (y) or longitudinal axis (x) and from the acceleration (az) in the direction of the vertical axis (z), using the following relationships:

$$\phi x1 = \arcsin\left(\frac{ay}{g}\right) \text{ or } \phi y1 = \arcsin\left(\frac{ax}{g}\right) \tag{1}$$

$$\phi x2 = \arccos\left(\frac{az}{g}\right), \phi y2 = \arccos\left(\frac{az}{g}\right) \qquad (2)$$

- and **in that** the means (1, 2) determine the smaller of the two angles $\phi x1$ and $\phi x2$, as well as $\phi y1$ and $\phi y2$, as the inertial attitude angle ($\phi x$, $\phi y$).

**Revendications**

1. Procédé pour déterminer la position inertielle d'un véhicule,
   **caractérisé en ce qu'**
   on mesure les accélérations (az, ay, ax) du véhicule (FZ) dans la direction de son axe vertical (z) et dans la direction de son axe transversal (y) et/ou de son axe longitudinal (x),
   l'angle de position ($\varphi x$) du véhicule (FZ), entre l'axe longitudinal (x) du véhicule et le vecteur de l'accélération terrestre (g) et/ou l'angle de position ($\varphi y$) du véhicule entre l'axe transversal (y) du véhicule et le vecteur de l'accélération terrestre (g) sont calculés aussi bien à partir de l'accélération (ay, ax) dans la direction de l'axe transversal (y) ou de l'axe longitudinal (x), qu'à partir de l'accélération (az) dans la direction de l'axe vertical (z) selon les relations suivantes :

$$\varphi x1 = \arcsin\left(\frac{ay}{g}\right), \qquad \varphi y1 = \arcsin\left(\frac{ax}{g}\right) \qquad \textbf{(1)}$$

$$\varphi x2 = \arccos\left(\frac{az}{g}\right), \qquad \varphi y2 = \arccos\left(\frac{az}{g}\right) \qquad \textbf{(2)}$$

et on prend comme angle de position inertielle ($\varphi x$, $\varphi y$) le plus petit des deux angles ($\varphi x1$), ($\varphi x2$) ou ($\varphi y1$), ($\varphi y2$).

2. Procédé selon la revendication 1,
   **caractérisé en ce que**
   lorsqu'on formule un angle de rotation ($\alpha x$) autour de l'axe longitudinal (x) du véhicule et/ou un angle de rotation ($\alpha y$) autour de l'axe transversal (y) du véhicule par intégration (3) d'une ou plusieurs vitesses de rotation mesurées ($\omega x$, $\omega y$, $\omega z$), on démarre l'intégration avec le ou les angles de position calculés ($\varphi x$, $\varphi y$).

3. Dispositif pour déterminer la position inertielle d'un véhicule,
   **caractérisé en ce que**

   - des capteurs d'accélération (BZ, BY, BX) mesurent les accélérations (az, ay, ax) du véhicule (FZ) dans la direction de son axe vertical (z) et dans la direction de son axe transversal (y) et/ou de son axe longitudinal (x),
   - des moyens (1, 2) déduisent l'angle de position ($\varphi x$) du véhicule (FZ) entre son axe longitudinal (x) et le vecteur de l'accélération terrestre (g) et/ou l'angle de position ($\varphi y$) entre son axe transversal (y) et le vecteur de l'accélération terrestre (g) à la fois à partir des accélérations (ay, ax) dans la direction de l'axe transversal (y) ou de l'axe longitudinal (x) ainsi qu'à partir de l'accélération (az) dans la direction de l'axe vertical selon les relations suivantes :

$$\varphi x1 = \arcsin\left(\frac{ay}{g}\right), \qquad \varphi y1 = \arcsin\left(\frac{ax}{g}\right) \qquad \textbf{(1)}$$

$$\varphi x2 = \arccos\left(\frac{az}{g}\right), \quad \varphi y2 = \arccos\left(\frac{az}{g}\right) \tag{2}$$

et les moyens (1, 2) déterminent le plus petit des deux angles ($\varphi$x1), ($\varphi$x2) ou ($\varphi$y1), ($\varphi$y2) comme angle de position inertielle ($\varphi$x, $\varphi$y).

Fig. 1

Fig. 2

Fig. 3